# EUROPEAN PATENT APPLICATION

(11) **EP 4 404 608 A1**
(43) Date of publication of application: **24.07.2024**
(21) Application number: 21957538.8
(22) Date of filing: 16.09.2021
(51) Int. Cl.: H04W 16/14, H04W 72/04, H04W 28/04

(54) **TERMINAL AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); SHIBAIKE, Naoya, Tokyo 100-6150 (JP); KUMAGAI, Shinya, Tokyo 100-6150 (JP); NAGATA, Satoshi, Tokyo 100-6150 (JP)
(74) Representative: Hoffmann Eitle
(86) International application number: PCT/JP2021/034185
(87) International publication number: WO 2023/042357

(57) **Abstract**

A terminal including: a reception unit configured to receive a control channel or a shared channel from another terminal in an unlicensed band; a control unit configured to determine to transmit a feedback corresponding to the control channel or the shared channel to the another terminal via a shared channel; and a transmission unit configured to transmit the feedback via the shared channel depending on the determination.

## Description

### FIELD OF THE INVENTION

The present invention relates to a terminal and a communication method in a wireless communication system.

### BACKGROUND OF THE INVENTION

In LTE (Long Term Evolution) and LTE successor systems (e.g., LTE-A (LTE Advanced), NR (New Radio) (also referred to as 5G)), a D2D (Device to Device) technology in which terminals communicate directly with each other without using a base station is being discussed (e.g., Non-Patent Document 1).

The D2D reduces traffic between the terminals and the base stations and enables communication between the terminals even when the base stations are unable to communicate during a disaster, etc. Although the 3GPP (3rd Generation Partnership Project) refers to D2D as a "sidelink," the more generic term D2D is used herein. However, in the description of embodiments described below, the sidelink is also used as needed.

The D2D communication is broadly classified into: D2D discovery for discovering other terminals capable of communication; and D2D communication (D2D direct communication, direct communication between terminals, etc.,) for direct communication between terminals. Hereinafter, when D2D communication and D2D discovery are not specifically distinguished, it is simply called D2D. A signal sent and received by D2D is called a D2D signal. Various use cases of services related to V2X (Vehicle to Everything) in NR are being discussed.

In addition, in NR release 17, using a higher frequency band than a conventional release (e.g., Non-Patent Document 2) is being discussed. For example, applicable numerologies including subcarrier spacings, channel bandwidths, etc., physical layer design, and possible failures in actual wireless communication in the 52.6 GHz to 71 GHz frequency band have been discussed.

### Citation List

### Non-Patent Document

Non-Patent Document 1: 3GPP TS 38.211 V16.6.0 (2021-06)
Non-Patent Document 2: 3GPP TS 38.306 V16.5.0 (2021-06)

### SUMMARY OF THE INVENTION

### TECHNICAL PROBLEM

In a frequency band in which frequencies higher than the conventional frequencies are used, an unlicensed band is defined. In the unlicensed band, various regulations are specified, and, for example, an LBT (Listen before talk) is to be performed when accessing a channel. In the higher frequency band, in a case of performing a D2D communication, an operation adapted to the regulations in the unlicensed band is required.

The present invention has been made in view of the above points, and it is an object of the present invention to enable device-to-device direct communications that are highly adapted to the regulations.

### SOLUTION TO PROBLEM

According to the disclosed technology, a terminal is provided. The terminal includes: a reception unit configured to receive a control channel or a shared channel from another terminal in an unlicensed band; a control unit configured to determine to transmit a feedback corresponding to the control channel or the shared channel to the another terminal via a shared channel; and a transmission unit configured to transmit the feedback via the shared channel depending on the determination.

### ADVANTAGEOUS EFFECTS OF INVENTION

According to the disclosed technique, a technology is provided that enables device-to-device direct communications that are highly adapted to the regulations.

### BRIEF DESCRIPTION OF THE DRAWINGS

[Fig. 1] is a drawing for describing V2X.
[Fig. 2] is a drawing illustrating an example of a frequency range in an embodiment of the present invention.
[Fig. 3] is a first drawing for describing the HARQ feedback.
[Fig. 4] is a second drawing for describing the HARQ feedback.
[Fig. 5] is a third drawing for describing the HARQ feedback.
[Fig. 6] is a fourth drawing for describing the HARQ feedback.
[Fig. 7] is a drawing for describing a terminal in an embodiment of the present invention.
[Fig. 8] is a flowchart illustrating an example of a processing flow of transmission and reception of the terminal in an embodiment of the present invention.
[Fig. 9] is a drawing illustrating an example of a functional configuration of the terminal in an embodiment of the present invention.
[Fig. 10] is a drawing illustrating an example of a hardware structure of the terminal in an embodiment of the present invention.
[Fig. 11] is a drawing illustrating an example of a structure of a vehicle in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but are not limited to, conventional NR or LTE, for example. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is pre-configured, or may mean that a radio parameter indicated by the base station or the terminal is configured.

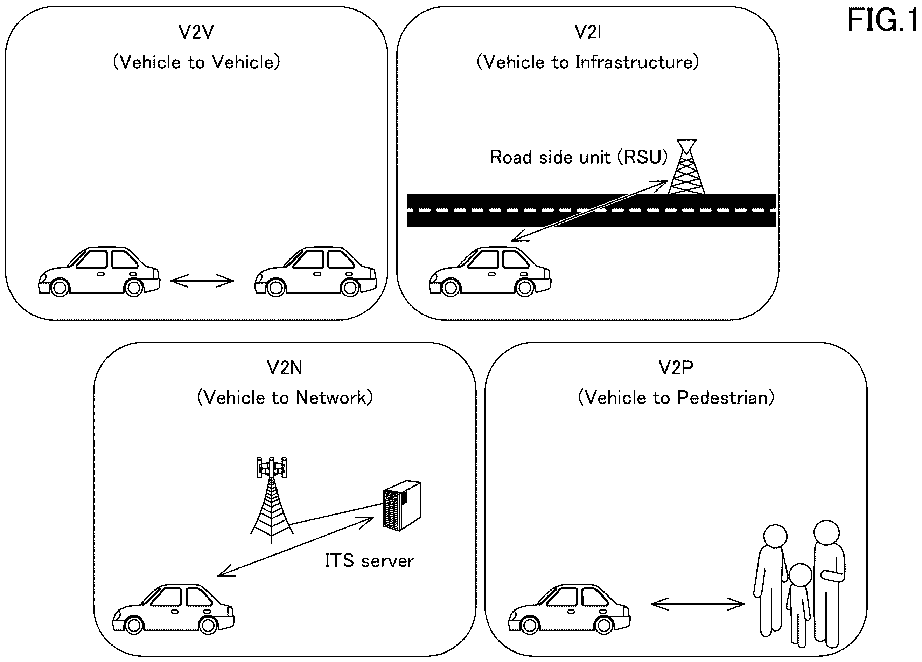

Fig. 1 is a drawing illustrating V2X. In 3GPP, enhancing D2D functions to realize V2X (Vehicle to Everything) or eV2X (enhanced V2x) has been discussed and technical specifications are being developed. As illustrated in Fig. 1, V2X is a part of ITS (Intelligent Transport Systems) and is a generic name (collective name) for: V2V (Vehicle to Vehicle) referring to a form of communication performed between vehicles; V2I (Vehicle to Infrastructure) referring to a form of communication performed between a vehicle and a road-side unit (RSU) that is installed on roadside; V2N (Vehicle to Network) referring to a form of communication performed between a vehicle and an ITS server; and V2P (Vehicle to Pedestrian) referring to a form of communication performed between a vehicle and a mobile terminal that is carried by a pedestrian.

Further, in 3GPP, V2X using LTE/NR's cellular communication and communication between terminals has been discussed. V2X using cellular communication may be referred to as cellular V2X. In NR V2X, discussions have been performed to realize higher system capacity, reduced latency, higher reliability, and QoS (Quality of Service) control.

With respect to LTE V2X or NR V2X, it is assumed that discussions may be not limited to 3GPP specifications in the future. For example, it is assumed that discussions may include: how to secure interoperability; how to reduce cost by implementing higher layers; how to use or how to switch between multiple RATs (Radio Access Technologies); how to handle regulations of each country; how to obtain and distribute data of LTE/NR V2X platform; and how to manage and use databases.

In an embodiment of the present invention, a form of embodiment is mainly assumed in which communication apparatuses are mounted on vehicles. However, an embodiment of the present invention is not limited to such a form. For example, communication apparatuses may be terminals carried by people, may be apparatuses mounted on drones or aircrafts, or may be base stations, RSUs, relay stations (relay nodes), terminals capable of scheduling, etc.

It should be noted that SL (Sidelink) may be distinguished from UL (Uplink) or DL (Downlink) based on any one of, or any combination of the following 1) through 4). Furthermore, SL may be referred to as a different name.
1) Resource arrangement in the time domain
2) Resource arrangement in the frequency domain
3) Synchronization signal to be referred to (including SLSS (Sidelink Synchronization Signal))
4) Reference signal that is used for path loss measurement used for transmission power control

Further, with respect to OFDM (Orthogonal Frequency Division Multiplexing) of SL or UL, any of CP-OFDM (Cyclic-Prefix OFDM), DFT-S-OFDM (Discrete Fourier Transform-Spread-OFDM), OFDM without Transform precoding, and OFDM with Transform precoding may be applied.

In LTE SL, with respect to allocation of SL resources to the terminal, Mode 3 and Mode 4 are specified. In Mode 3, transmission resources are dynamically allocated using DCI (Downlink Control Information) that is transmitted from a base station to a terminal. In addition, SPS (Semi Persistent Scheduling) is available in Mode 3. In Mode 4, the terminal autonomously selects transmission resources from a resource pool.

It should be noted that a slot in an embodiment of the present invention may be read as (replaced with) a symbol, a mini slot, a subframe, a radio frame, or a TTI (Transmission Time Interval). Further, a cell in an embodiment of the present invention may be read as (replaced with) a cell group, a carrier component, a BWP (bandwidth part), a resource pool, a resource, a RAT (Radio Access Technology), a system (including a wireless LAN), etc.

It is to be noted that, in an embodiment of the present invention, the terminal is not limited to a V2X terminal, but may be any type of terminal that performs D2D communication. For example, the terminal may be a terminal carried by a user, such as a smartphone, or an IoT (Internet of Things) device, such as a smart meter.

With respect to the 3GPP release 16 or release 17 sidelink, specifications are being developed targeting 1) and 2) below.

1) Environment in the ITS (Intelligent Transport Systems) band in which there are only 3GPP terminals
2) Environment in the FR1 (Frequency range 1) and FR2 licensed band defined in NR in which UL resources can be used for SL

Discussions are being performed in which an unlicensed band is newly targeted as the sidelink of 3GPP release 18 and later. For example, an unlicensed band such as the 5 GHz to 7 GHz band, 60 GHz band, or the like.

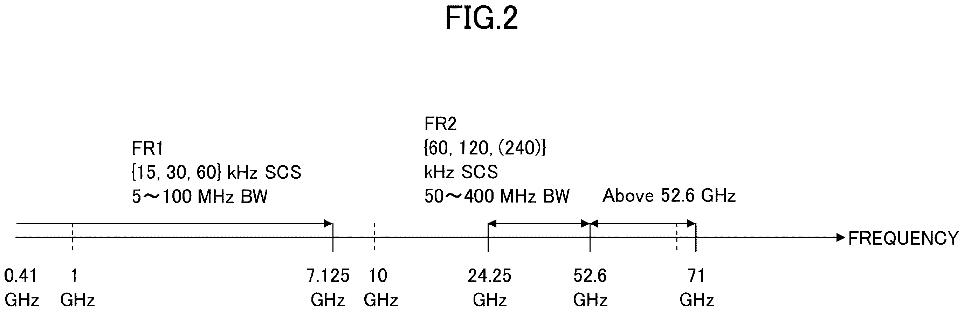

Fig. 2 is a drawing illustrating an example of a frequency range in an embodiment of the present invention. In the 3GPP release 17 NR specifications, for example, an operation in a frequency band of 52. 6 GHz or higher is being discussed. Note that, as illustrated in Fig. 2, FR1 in which the current operation is specified is a frequency band from 410 MHz to 7.125 GHz, the SCS (Sub carrier spacing) is 15, 30, or 60 kHz, and the bandwidth is from 5 MHz to 100 MHz. FR2 is a frequency band from 24.25 GHz to 52.6 GHz, the SCS is 60, 120, or 240 kHz, and the bandwidth is from 50 MHz to 400 MHz. For example, the newly operated frequency band may be assumed to be a band from 52.6 GHz to 71 GHz.

For example, a band from 5.15 GHz to 5.35 GHz, a band from 5.47 GHz to 5.725 GHz, a band that is equal to or higher than 5.925 GHz, or the like is expected as an example of an unlicensed band in the 5 GHz to 7 GHz band.

For example, a band from 59 GHz to 66 GHz, a band from 57 GHz to 64 GHz or 66 GHz, a band from 59.4 GHz to 62.9 GHz, or the like is expected as an example of an unlicensed band in the 60 GHz band.

In the unlicensed band, various regulations are specified so as to avoid influence to another system or another device.

For example, in the 5 GHz to 7 GHz band, an LBT (Listen before talk) is to be performed when accessing a channel. The base station or the terminal performs power detection in a predetermined period immediately before a transmission, and stops the transmission in a case where the power exceeds a predetermined value, that is, in a case where a transmission from another device is detected. In addition, the maximum channel occupancy time (MCOT) is specified. MCOT is a maximum time duration in which transmission continuation is allowed in a case where transmission is started after the LBT, and is 4 ms in Japan, for example. In addition, in a case where the transmission uses a carrier bandwidth, X% or more of the bandwidth must be used as the occupied channel bandwidth (OCB) requirements. For example, in Europe, as much as 80% to 100% of NCB (nominal channel bandwidth) is required to be used. The purpose of the OCB requirements is that the channel access power detection is to be performed correctly. In addition, with respect to the maximum transmission power and the maximum power spectral density, it is specified that the transmission is to be performed with predetermined transmission power or less. For example, in Europe, the maximum transmission power is 23 dBm in the 5150 MHz to 5350 MHz band. In addition, for example, in Europe, the maximum power spectral density is 10 dBm/MHz in the 5150 MHz to 5350 MHz band.

In addition, various regulations are specified also in the 60 GHz band. For example, an LBT is to be performed at the time of channel access. The base station or the terminal performs power detection in a predetermined period immediately before a transmission, and stops the transmission in a case where the power exceeds a predetermined value, that is, in a case where a transmission from another device is detected. In addition, with respect to the maximum transmission power and the maximum power spectral density, it is specified that the transmission is to be performed with predetermined transmission power or less. In addition, the capability of satisfying the OCB requirements is specified.

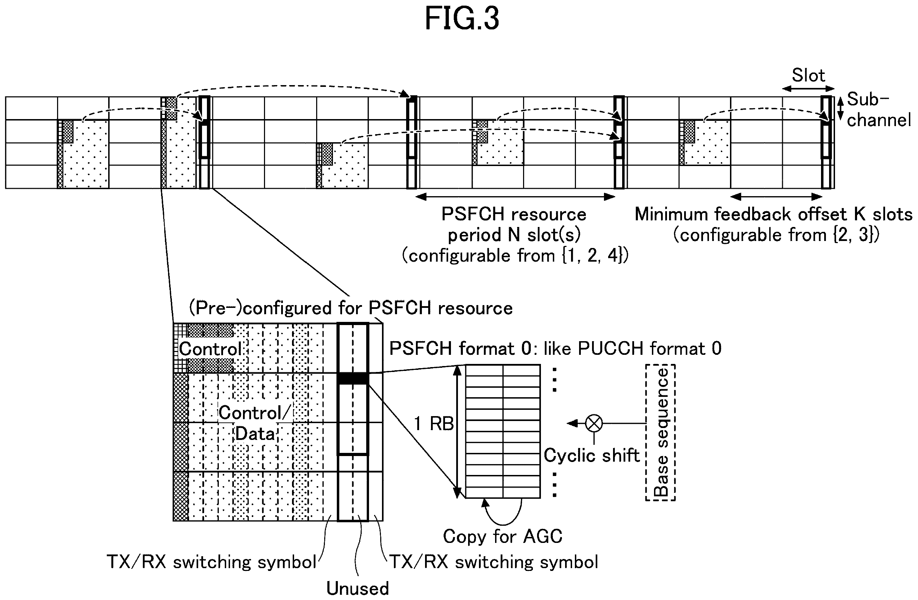

Fig. 3 is a first drawing for describing the HARQ feedback. In the 3GPP release 16 and release 17 sidelink, a function of HARQ feedback via PSFCH (Physical Sidelink Feedback Channel) is specified.

The HARQ feedback has been introduced in order to improve QoS, reliability, and the spectral efficiency. The unicast or groupcast HARQ feedback can be enabled or disabled by using the (pre-)configuration and SCI. In addition, HARQ-ACK is reported via PSFCH, and the time domain resource at the time of reporting is determined according to the (pre-)configuration.

For example, PSFCH resources are specified every N slots. N is configured to be any one of 1, 2, and 4. In addition, the shortest offset from the data reception to the feedback transmission is specified to be K slots. K is configured to be 2 or 3. In this case, the actual offset is a smallest integer value that is equal to or greater than the specified K.

PSFCH carries only a single HARQ-ACK bit. In other words, multiplexing of multiple HARQ-ACK bits in the PSFCH resource is not supported.

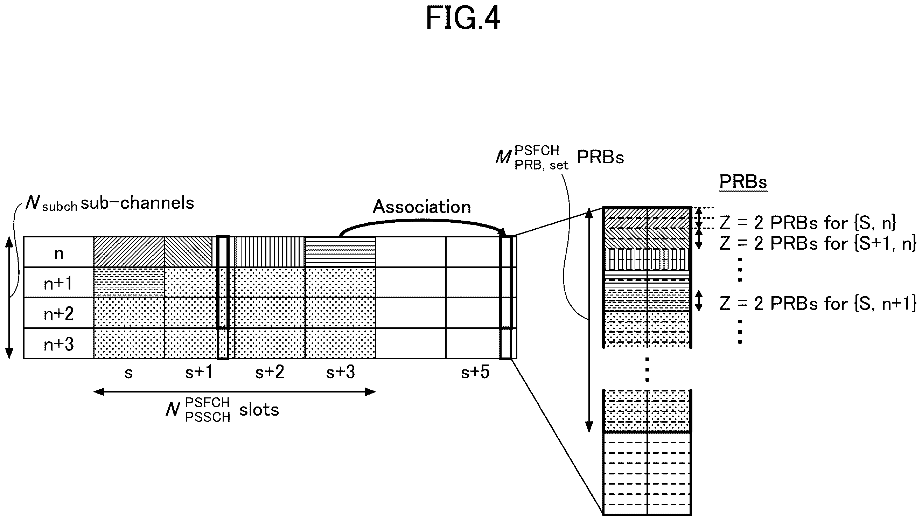

Fig. 4 is a second drawing for describing the HARQ feedback. The slot index "s" and the sub-channel start index "n" are associated with a set of PSFCH resource candidates configured by the number of physical resource blocks "Z" and the number of cyclic shift pairs of each resource block "Y".

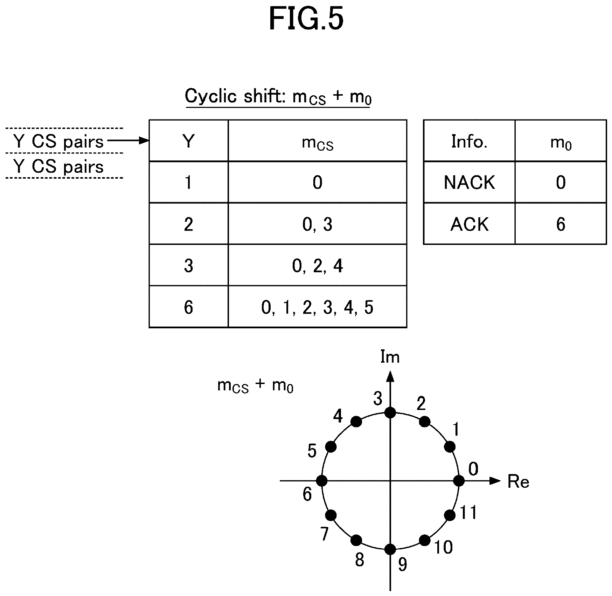

Fig. 5 is a third drawing for describing the HARQ feedback. The cyclic shift is M_{CS}+M₀ where M_{CS} is selected in accordance with Y, and M₀ is selected depending on whether the HARQ-ACK response is negative (NACK) or positive (ACK). With respect to the Z physical resource blocks, the slot order is applied first, and then, the sub-channel order is applied. In addition, with respect to the index priority between the Z physical resource blocks and the Y cyclic shift pairs, the index of the physical resource block is applied first, and then, the index of the physical resource block is applied.

The PSFCH resource index is determined according to (P_{ID}+M_{ID})mod(Z*Y). Here, P_{ID} is a source ID. M_{ID} is 0 in a case of unicast/groupcast option 1, and is a member ID in a case of groupcast option 2.

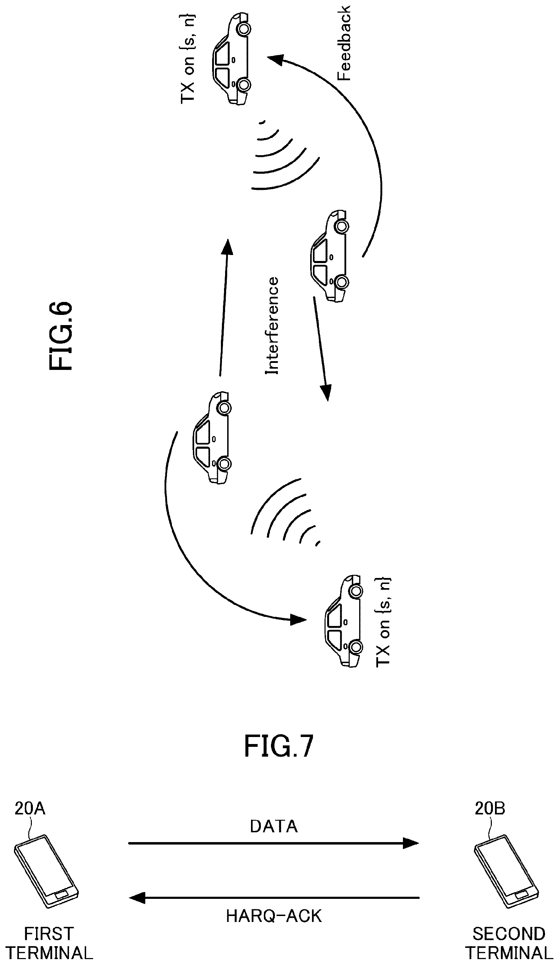

Fig. 6 is a fourth drawing for describing the HARQ feedback. The PSFCH resource is dependent on P_{ID} in order to avoid a collision with another terminal. There is a possibility that the transmitting terminals select the same transmission resource when multiple receiving terminals are located close to each other.

### (Overview of embodiment)

There is a possibility of PSFCH transmission failure occurring frequently in the sidelink. With respect to the above-described unlicensed band, there is a possibility of LBT failure, hidden terminal problem, etc., occurring in the unlicensed spectrum. Accordingly, in an embodiment of the present invention, a method of implementing the stable HARQ feedback in the sidelink will be described. Hereinafter, the unlicensed band will be used as an example. However, the technique related to an embodiment of the present invention can be applied to a band other than the unlicensed band.

Fig. 7 is a drawing for describing a terminal in an embodiment of the present invention. In the following description, the first terminal 20A is a terminal that transmits data. The second terminal 20B is a terminal that receives the data and transmits HARQ-ACK indicating the reception result to the first terminal 10A.

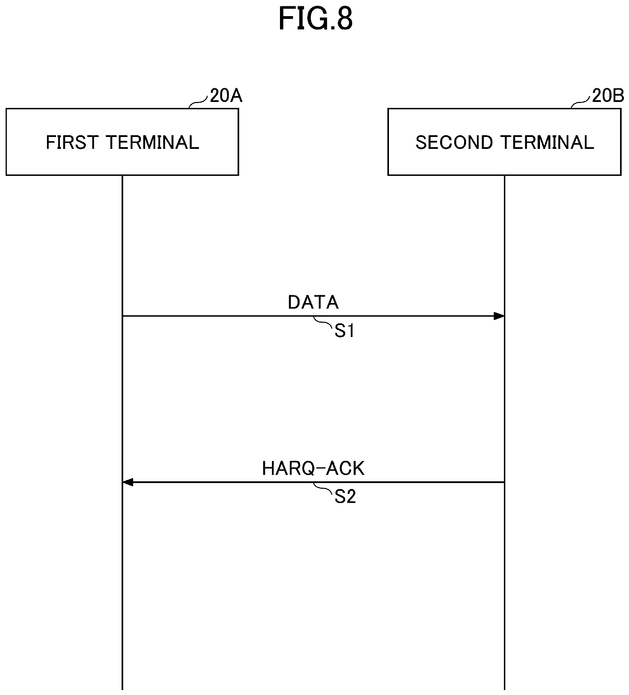

Fig. 8 is a flowchart illustrating an example of a processing flow of transmission and reception of the terminal in an embodiment of the present invention. The first terminal 20A transmits data to the second terminal 20B (step S1). The second terminal 20B receives the data, and transmits a HARQ feedback response (HARQ-ACK) indicating the reception result to the first terminal 10A (step S2).

In this step S2, the second terminal 20B transmits the HARQ-ACK via a physical sidelink shared channel (PSSCH).

Hereinafter, embodiments from an embodiment 1 to an embodiment 4 will be described as embodiments of the present invention.

### (Embodiment 1)

In an embodiment 1, a method of determining HARQ-ACK information to be transmitted will be described.

### <Option 1>

The second terminal 20B may transmit all HARQ processes of HARQ-ACK information. This may be the same method as that of the type-3 HARQ-ACK CB in the HARQ uplink transmission.

### <Option 2>

The second terminal 20B may transmit HARQ-ACK information based on an indication from the first terminal 20A.

### <Option 3>

The second terminal 20B may transmit HARQ-ACK information related to PSCCH/PSSCH corresponding to PSSCH for transmitting HARQ-ACK information. That is, it may be assumed that there is an association between PSCCH/PSSCH transmitted from the first terminal 20A and PSSCH for HARQ feedback transmitted by the second terminal 20B.

### <Option 4>

The second terminal 20B may generate a HARQ-ACK bit for the potential PSCCH/PSSCH reception in a predetermined time period. This may be the same method as that of the type-1 HARQ-ACK CB in the HARQ uplink transmission.

Specifically, in a case where the second terminal 20B transmits HARQ-ACK information in slots from slot n to slot n+K and where the number of sub-channels is M, the second terminal 20B may transmit K*M pieces of HARQ-ACK information. In other words, the second terminal 20B may generate one bit of HARQ-ACK information for each slot/sub-channel, and may store the corresponding positive response (ACK) or negative response (NACK) in the slot/sub-channel for which PSCCH (and PSSCH) is (are) actually received.

In addition, in a case where the second terminal 20B transmits HARQ-ACK information in slots from slot n to slot n+K and where the number of sub-channels is M, the second terminal 20B may transmit K pieces of HARQ-ACK information. In other words, the second terminal 20B may generate one bit of HARQ-ACK information for each slot, and may store the corresponding positive response (ACK) or negative response (NACK) for a slot via which PSCCH (and PSSCH) is (are) actually received.

The second terminal 20B may generate HARQ-ACK information indicating the positive response (ACK) or the negative response (NACK) only for PSCCH/PSSCH transmitted from the first terminal 20A, and may generate HARQ-ACK information indicating the negative response (NACK) for PSCCH/PSSCH transmitted from a terminal other than the first terminal 20A or for a case of not receiving PSCCH/PSSCH.

According to the method of determining the HARQ-ACK information related to an embodiment of the present invention, the HARQ-ACK information that is to be transmitted can be uniquely determined, and thus, the first terminal 20A and the second terminal 20B can share the same understanding.

### (Embodiment 2)

In an embodiment 2, a method of transmitting the HARQ-ACK information will be described.

### <Option 1>

The second terminal 20B may transmit the HARQ-ACK information via MAC-CE. The priority order of the MAC-CE may be higher than, may be the same as, or may be lower than, SCCH. In addition, the priority order of the MAC-CE may be higher than, may be the same as, or may be lower than, the sidelink CSI reporting MAC-CE.

### <Option 2>

The second terminal 20B may multiplex the HARQ-ACK information into PSSCH as a physical layer signal to be transmitted. For example, after the second-stage SCI mapping, the second terminal 20B may perform multiplexing of the HARQ-ACK information according to rate-matching using the same mapping method. Alternatively, the second terminal 20B may perform multiplexing of data with respect to the remaining resource after the HARQ-ACK information mapping.

According to the transmission method of the HARQ-ACK information related to an embodiment of the present invention, the HARQ-ACK information can be transmitted by using an appropriate method such as PSSCH, or the like.

### (Embodiment 3)

In an embodiment 3, a method of triggering the HARQ-ACK information will be described.

### <Option 1>

The first terminal 20A may request the second terminal 20B to transmit the HARQ-ACK information using PSSCH via SCI.

### <Option 2>

The second terminal 20B may autonomously transmit the HARQ-ACK information using PSSCH.

### <Option 3>

The second terminal 20B may transmit the HARQ-ACK information using PSSCH in a case where a predetermined condition is satisfied.

For example, the second terminal 20B may transmit the HARQ-ACK information using PSSCH after an elapse of a predetermined time from the previous transmission of HARQ-ACK information using PSSCH.

In addition, the second terminal 20B may transmit the HARQ-ACK information using PSSCH after the reception of a predetermined number of PSCCH/PSSCH or the reception of a predetermined number of transport blocks from the first terminal 20A.

### <Option 4>

The second terminal 20B may selectively use a case of transmitting the HARQ-ACK information using PSSCH and a case of transmitting the HARQ-ACK information using PSFCH.

For example, the second terminal 20B may transmit the HARQ-ACK information using both PSSCH and PSFCH.

In addition, the second terminal 20B may autonomously determine to transmit the HARQ-ACK information using PSSCH or using PSFCH, and may transmit the HARQ-ACK information by using one of the determined PSSCH or PSFCH.

The first terminal 20A may transmit a request or an indication requesting or indicating which of PSSCH or PSFCH is to be used for transmitting the HARQ-ACK information to the second terminal 20B. The second terminal 20B transmits the HARQ-ACK information by using PSSCH or PSFCH in accordance with the request or the indication.

The second terminal 20B may transmit terminal capability information indicating which of PSSCH or PSFCH is supported as a channel for transmitting the HARQ-ACK information to the first terminal 20A. In the above-described case, the first terminal 20A may transmit a request explicitly indicating the transmission method, or may assume that the HARQ feedback is to be performed by the supported transmission method, based on the indicated terminal capability.

In addition, an SCI bit for indicating the transmission of the HARQ-ACK information using PSSCH may be defined separately from the "HARQ feedback enabled/disabled indicator" field, and may be the "HARQ feedback enabled/disabled indicator on PSSCH" field, for example. In this case, the "HARQ feedback enabled/disabled indicator" field and the "HARQ feedback enabled/disabled indicator on PSSCH" field may each be one-bit information.

In addition, an indication related to transmission of the HARQ-ACK information using PSSCH may be performed by the "HARQ feedback enabled/disabled indicator" field of SCI. In this case, the "HARQ feedback enabled/disabled indicator" field may be two-bit information. For example, the contents of the "HARQ feedback enabled/disabled indicator" field may be 00=disabled, 01=enabled via PSFCH (transmission via PSFCH is available), 10=enabled via PSSCH (transmission via PSFCH is available), and 11=enabled via both (transmission via PSSCH and transmission via PSFCH are both available).

In addition, the HARQ-ACK information may be transmitted via PSSCH in a resource pool in which a PSFCH resource is not configured.

According to a method of triggering the HARQ-ACK information related to an embodiment of the present invention, an appropriate method of triggering transmission of the HARQ-ACK information using PSSCH can be performed.

### (Embodiment 4)

In an embodiment 4, a method of determining the resource for PSSCH used for transmitting the HARQ-ACK information will be described.

### <Option 1>

The first terminal 20A may request the HARQ feedback, the second terminal 20B may select a resource based on the request, and the second terminal 20B may transmit the HARQ-ACK information by using the selected resource. This may be the same method as that of CSI reporting in the sidelink.

In this case, the latency requirements until the transmission completion may be defined, and may be specified as the "sl-LatencyBound-HARQ-Report" field, for example. The latency requirements may be configured by a PC5-RRC signal. In addition, a timer may be started based on the above-described parameter after the HARQ feedback is triggered by the method described in an embodiment 3.

### <Option 2>

The PSCCH/PSSCH resource used for transmitting the HARQ-ACK information may be reserved or indicated by the first terminal 20A.

For example, the first terminal 20A may reserve a resource by using the same SCI fields (time resource assignment field, frequency resource assignment field, and resource reservation period field) as those for the method of reserving the transmission resource for the first terminal 20A itself, and may indicate that the resource is reserved or indicated for the second terminal 20B via the SCI.

In addition, the first terminal 20A may perform reservation or indication by using SCI fields that are different from the above-described respective fields or by using a different SCI format.

A third terminal that is different from the first terminal 20A or the second terminal 20B may detect the above-described resource reservation by using sensing, and may perform an operation of resource identification or selection in order to avoid a collision. The operation of the third terminal may be the same as the conventional operation with respect to the resource reservation (that is, an operation of determining whether the resource exclusion from the candidate resources is to be performed based on the reception power and the priority of the above-described resource reservation).

### <Option 3>

The second terminal 20B may determine the PSCCH/PSSCH resource used for transmitting the HARQ-ACK information, based on the corresponding PSCCH/PSSCH (transmitted from the first terminal 20A). In other words, the corresponding PSCCH/PSSCH resource may be associated with the PSCCH/PSSCH resource used for transmitting the HARQ-ACK information by using a predetermined method.

For example, the second terminal 20B may determine, as the PSCCH/PSSCH resource used for transmitting the HARQ-ACK information, a resource that has the same frequency resource as that of PSCCH/PSSCH transmitted from the first terminal 20A and that has a time resource X slots after the time resource of PSCCH/PSSCH transmitted from the first terminal 20A.

As described in the option 2, the third terminal may detect the above-described resource reservation by using sensing, and may perform an operation of resource identification or selection in order to avoid a collision. The third terminal may determine exclusion of the PSCCH/PSSCH resource used for transmitting the HARQ-ACK information, by using the same RSRP or priority order as the corresponding PSCCH/PSSCH.

According to the method of determining the PSCCH/PSSCH resource used for transmitting the HARQ-ACK information related to an embodiment of the present invention, the resource used for transmitting the HARQ-ACK information can be determined by an appropriate method. According to a method of an option 1, the configuration of each terminal can be made simple by reusing the conventional method, the impact on the transport block transmission by the second terminal 20B can be smaller. In addition, according to a method of an option 2 or an option 3, the HARQ feedback via PSSCH can be performed immediately, and a collision with respect to the transmission resource can be avoided.

### (Note)

In an embodiment of the present invention described above, PSSCH used for transmitting the HARQ-ACK information may be referred to by another name. For example, may be referred to by PSFCH format 1. Here, the PSFCH format 1 may be a channel with the same time width as PSCCH/PSSCH. In addition, the PSFCH format 1 may be transmitted using the same frequency resource as that of PSCCH/PSSCH, or may be transmitted using a different frequency resource.

PSSCH used for transmitting the HARQ-ACK information may be limited to unicast. For example, the second terminal 20B may transmit PSSCH used for transmitting the HARQ-ACK information to the first terminal 20A by using unicast.

In addition, the second terminal 20B may generate the HARQ-ACK bit to be transmitted via PSSCH by using information related to unicast alone.

### (Device configuration)

Next, an example of a functional configuration of a terminal that performs the processing and operation described above will be described. The first terminal 20A and the second terminal 20B have functions of performing the above-described embodiments. It is to be noted, however, the first terminal 20A and the second terminal 20B may include only one of proposed functions in the embodiments.

### <The first terminal 20A and the second terminal 20B>

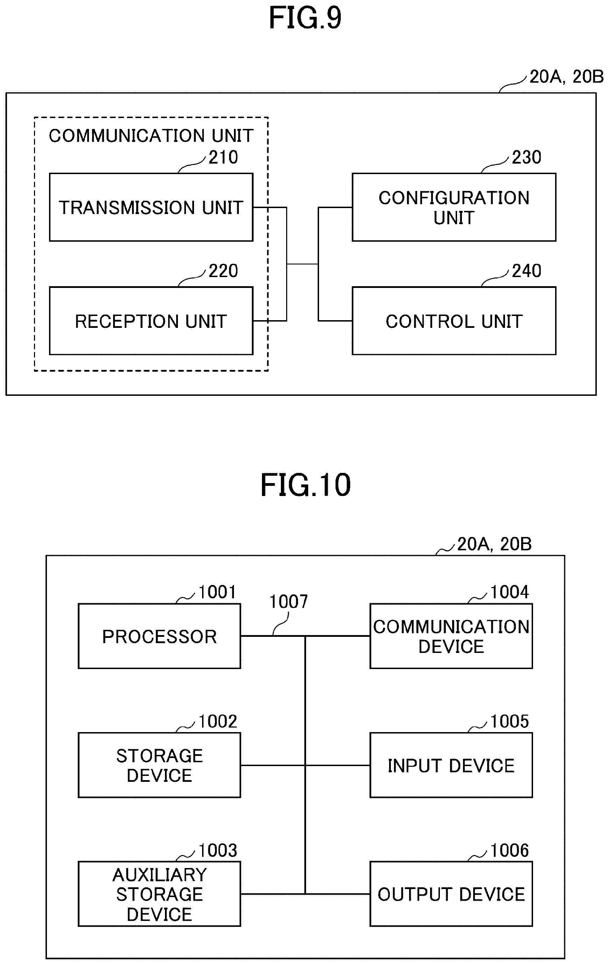

Fig. 9 is a drawing illustrating an example of a functional configuration of a terminal in an embodiment of the present invention. As illustrated in Fig. 9, the first terminal 20A or the second terminal 20B includes a transmission unit 210, a reception unit 220, a configuration unit 230, and a control unit 240. The functional configuration illustrated in Fig. 9 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station via the reception unit 220, and reads them from the storage device as necessary. In addition, the configuration unit 230 also stores pre-configured configuration information. The control unit 240 controls the entire terminal 20 including control related to signal transmission and reception. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

A terminal according to an embodiment of the present invention may be configured as a terminal described in each item below. In addition, a communication method below may be performed.

### <Configuration related to an embodiment of the present invention>

### (First item)

A terminal including:
a reception unit configured to receive a control channel or a shared channel from another terminal in an unlicensed band;
a control unit configured to determine to transmit a feedback corresponding to the control channel or the shared channel to the another terminal via a shared channel; and
a transmission unit configured to transmit the feedback via the shared channel depending on the determination.

### (Second item)

The terminal as described in the first item, wherein
the control unit determines HARQ response information based on an indication from the another terminal or on the control channel or the shared channel corresponding to the feedback, and
the transmission unit transmits the determined HARQ response information to the another terminal via the shared channel.

### (Third item)

The terminal as described in the first item or the second item, wherein
the control unit determines to multiplex HARQ response information with a shared channel that is to be transmitted to the another terminal and to transmit the multiplexed HARQ response information to the another terminal.

### (Fourth item)

The terminal as claimed in any one of claims 1 to 3, wherein
the control unit determines to transmit the feedback to the another terminal via the shared channel, based on a request from the another terminal, or in a case where a predetermined condition is satisfied.

### (Fifth item)

The terminal as described in any one of the first item to the fourth item, wherein
the control unit determines a resource that is to be used for the feedback, based on a request from the another terminal, or based on a resource that is reserved or indicated by the another terminal.

### (Sixth item)

A communication method performed by a terminal, the communication method including:
receiving a control channel or a shared channel from another terminal in an unlicensed band;
determining to transmit a feedback corresponding to the control channel or the shared channel to the another terminal via a shared channel; and
transmitting the feedback via the shared channel depending on the determination.

According to any one of the above-described configurations, a technology is provided that enables device-to-device direct communications that are highly adapted to the regulations. According to the second item, the HARQ-ACK information to be transmitted can be uniquely determined. According to the third item, the HARQ-ACK information can be transmitted via a shared channel. According to the fourth item, a trigger of transmitting the HARQ-ACK information via a shared channel can be determined by an appropriate method. According to the fifth item, a resource for transmitting the HARQ-ACK information can be determined by an appropriate method.

### (Hardware structure)

The block diagrams used for describing an embodiment of the present invention (Fig. 9) indicates functional unit blocks. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

For example, the first terminal 20A, the second terminal 20B, or the like, in an embodiment of the present invention may function as a computer for processing the radio communication method of the present disclosure. Fig. 10 is a drawing illustrating an example of hardware structures of a terminal related to an embodiment of the present invention. Each of the above-described first terminal 20A and the second terminal 20B may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the first terminal 20A and the second terminal 20B may include one or more of each of the devices illustrated in the figure, or may be configured without including some of the devices.

Each function in the first terminal 20A and the second terminal 20B is implemented by having the processor 1001 perform an operation by reading predetermined software (programs) onto hardware such as the processor 1001 and the storage device 1002, and by controlling communication by the communication device 1004 and controlling at least one of reading or writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 240 of the terminal illustrated in Fig. 9 may be implemented by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the first terminal 20A and the second terminal 20B may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be implemented by the hardware. For example, the processor 1001 may be implemented by at least one of the above hardware elements.

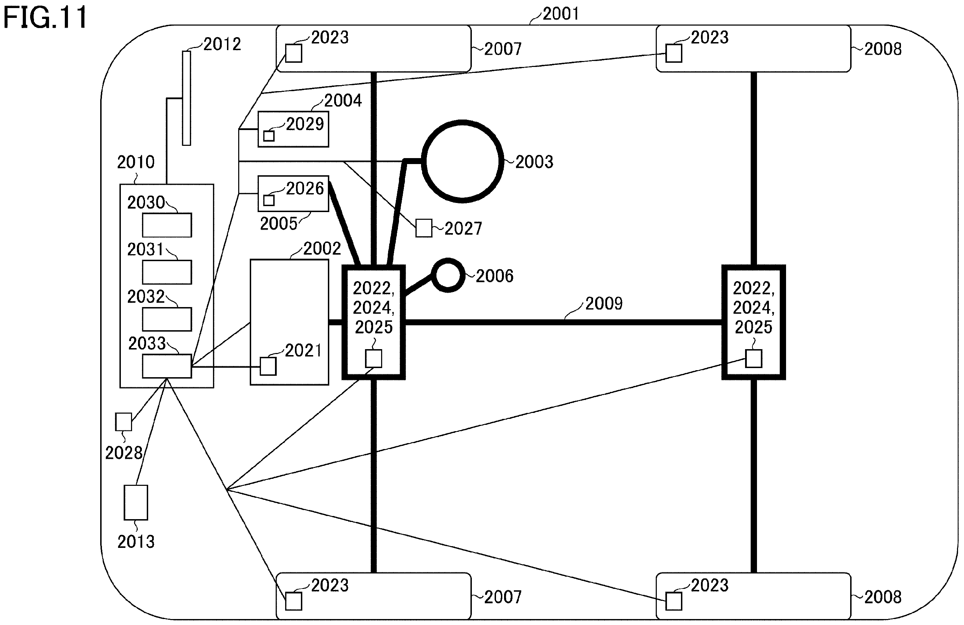

Fig. 11 illustrates an example of a configuration of a vehicle. As shown in Fig. 11, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction) . Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals (e.g., may be referred to as D2D (Device-to-Device), V2X (Vehicle-to-Everything), etc.). In this case, the function of the base station described above may be provided by the terminal. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station performs scheduling of radio resources (such as frequency bandwidth, transmission power, etc., that can be used in each the user terminal) for each of the user terminals in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

- 20A: First terminal
- 20B: Second terminal
- 210: Transmission unit
- 220: Reception unit
- 230: Configuration unit
- 240: Control unit
- 1001: Processor
- 1002: Storage device
- 1003: Auxiliary storage device
- 1004: Communication device
- 1005: Input device
- 1006: Output device
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port (IO port)

## Claims

1. A terminal comprising:
a reception unit configured to receive a control channel or a shared channel from another terminal in an unlicensed band;
a control unit configured to determine to transmit a feedback corresponding to the control channel or the shared channel to the another terminal via a shared channel; and
a transmission unit configured to transmit the feedback via the shared channel depending on the determination.

2. The terminal as claimed in claim 1, wherein
the control unit determines HARQ response information based on an indication from the another terminal or on the control channel or the shared channel corresponding to the feedback, and
the transmission unit transmits the determined HARQ response information to the another terminal via the shared channel.

3. The terminal as claimed in claim 1 or 2, wherein
the control unit determines to multiplex HARQ response information with a shared channel that is to be transmitted to the another terminal and to transmit the multiplexed HARQ response information to the another terminal.

4. The terminal as claimed in any one of claims 1 to 3, wherein
the control unit determines to transmit the feedback to the another terminal via the shared channel, based on a request from the another terminal, or in a case where a predetermined condition is satisfied.

5. The terminal as claimed in any one of claims 1 to 4, wherein
the control unit determines a resource that is to be used for the feedback, based on a request from the another terminal, or based on a resource that is reserved or indicated by the another terminal.

6. A communication method performed by a terminal, the communication method comprising:
receiving a control channel or a shared channel from another terminal in an unlicensed band;
determining to transmit a feedback corresponding to the control channel or the shared channel to the another terminal via a shared channel; and
transmitting the feedback via the shared channel depending on the determination.
